# EUROPÄISCHE PATENTSCHRIFT

(11) **EP 0 623 239 B1**
(45) Veröffentlichungstag und Bekanntmachung des Hinweises auf die Patenterteilung: **03.04.1996**
(21) Anmeldenummer: 93901691.1
(22) Anmeldetag: 18.01.1993
(51) Int. Cl.: G11B 17/22

(54) **PLATTENABSPIELGERÄT**
CD PLAYER
LECTEUR DE DISQUES

(30) Priorität: 21.01.1992 DE 4201465
(43) Veröffentlichungstag der Anmeldung: 09.11.1994
(73) Patentinhaber: NSM AKTIENGESELLSCHAFT, D-55411 Bingen (DE)
(72) Erfinder: NIEDERLEIN, Horst, D-6530 Bingen (DE); HEIDERSBERGER, Börge, D-6530 Bingen (DE)
(74) Vertreter: Becker, Bernd, Dipl.-Ing.
(86) Internationale Anmeldenummer: DE9300046
(87) Internationale Veröffentlichungsnummer: WO9314499

(56) Entgegenhaltungen:
- EP-A- 0 358 780
- EP-A- 0 427 329
- WO-A-90/04845
- DE-A- 3 931 715
- GB-A- 2 241 103

## Beschreibung

Die Erfindung bezieht sich auf ein Plattenabspielgerät mit mindestens einem auswechselbaren, in übereinanderliegenden Aufnahmefächern Platten enthaltenden Plattenmagazin, das schubfachartig in ein Gehäuse des Plattenabspielgerätes eingesetzt und über eine Verriegelungseinrichtung in dem Gehäuse in seiner Position festgelegt ist.

Aus der DE 39 22 721 A1 ist beispielsweise ein CD-Plattenabspielgerät mit zwei einander gegenüberliegenden, auswechselbaren Plattenmagazinen bekannt, die mit in horizontalen Aufnahmefächern gelagerten, jeweils eine Platte aufnehmenden Plattenhalter bestückt sind. Eine in Stapelrichtung der Plattenmagazine verfahrbare Transporteinrichtung befördert eine gewünschte Platte mit dem zugehörigen Plattenhalter zwischen dem Aufnahmefach des jeweiligen Plattenmagazins und einer Abspieleinheit hin und her. Bei derartigen Geräten ist es üblich, zu einem einzelnen Gerät mehrere Plattenmagazine zu besitzen und die einzelnen Plattenmagazine mit Platten aus einem bestimmten Musikgebiet, wie z.B. Klassik, Rock, Jazz usw. zu bestücken. Die nicht in das Plattenabspielgerät eingesetzten Plattenmagazine werden üblicherweise zum Schutz gegen Verstaubung in gesonderten Aufnahmeboxen abgestellt, denen jeweils ein Aufnahmebehälter für die Schutzhüllen der in dem Plattenmagazin abgelegten Platten zugeordnet ist.

Jedes Plattenmagazin des vorbekannten Abspielgerätes ist in seiner feststehenden Position über zwei an der Vorderseite des Gehäuses des Gerätes angebrachte Verriegelungen, die jeweils aus einem oben- und einem unten liegenden Schnappmechanismus bestehen, gehalten. Beide Verriegelungen sind über ein Gestänge mit einem gehäuseseitigen Verschiebehebel verbunden. Bei einer Bewegung des Verschiebehebels in der einen Richtung löst sich die erste Verriegelung, so daß das Plattenmagazin um eine Schwenkachse herum nach außerhalb des Gehäuses verschwenkt werden kann, um so das Auswechseln der in den Plattenhaltern gespeicherten Platten zu erleichtern. Bei einer Bewegung des Verschiebehebels in der anderen Richtung wird auch die zweite Verriegelung gelöst, wodurch das Plattenmagazin insgesamt aus dein Gehäuse entnommen werden kann. Hierbei muß sich jedoch sowohl beim Ausschwenken als auch bei der Herausnahme des Plattenmagazins die Transporteinrichtung in ihrer Endposition unterhalb der Ebene des Bodens des Plattenmagazins befinden, was also eine besondere Überwachungsfunktion der Lage der Transporteinrichtung beim Auswechseln des Plattenmagazins erfordert. Darüber hinaus bedingt die beim Auswechseln des Plattenmagazins notwendige Rotations- und Translationsbewegung desselben eine relativ aufwendige Konstruktion der beiden, jeweils aus zwei Schnappmechanismen bestehenden Verriegelungen.

Weiterhin zeigt die DE-A-3 931 715 ein Plattenabspielgerät mit einem auswechselbaren Plattenmagazin, das in übereinanderliegenden Aufnahmefächern gelagerte Platten enthält. Das schubfachartig in das Gehäuse des Plattenabspielgerätes eingesetzte Plattenmagazin ist über eine Verriegelungseinrichtung in dem Gehäuse in seiner Position festgelegt. Die Verriegelungseinrichtung umfaßt eine Arretieraussparung in der oberen Wand des Plattenmagazins, in die eine gehäuseseitige Andrückrolle des Plattenabspielgerätes nach dem Einführung des Plattenmagazins in das Plattenabspielgerät eingreift.

Ferner offenbart die EP-A-0138 005 ein Plattenabspielgerät mit vielen auswechselbaren Plattenmagazinen, die jedoch jeweils nur eine Platte enthalten. Jedes Plattenmagazin ist schubfachartig in das Plattenabspielgerät eingesetzt und weist eine Verriegelungseinrichtung auf, die aus zwei gegenüberliegenden federbelasteten, an den beiden Seiten des Plattenmagazins angebrachten Klinken-Hebeln, welche in gehäuseseitige Öffnungen eingreifen, besteht. Die Klinken--Hebel werden durch eine den Plattenmagazinen zugeordnete Auszugeinrichtung betätigt.

Der Erfindung liegt die Aufgabe zugrunde, ein Plattenabspielgerät der eingangs genannten Art zu schaffen, bei dem ein Austausch des Plattenmagazins auf schnelle und einfache Weise sichergestellt ist.

Diese Aufgabe wird erfindungsgemäß dadurch gelöst, daß die an der Vorderwand des Plattenmagazins angebrachte Verriegelungseinrichtung zwei durch eine Druckfeder beaufschlagte, gegenläufig bewegbare Hebel umfaßt, die mit zugehörigen gehäuseseitigen Öffnungen zusammenwirken, wobei jedem Hebel in der Vorderwand eine Aussparung zugeordnet ist, in der sich ein an dem hinter der Aussparung liegenden Hebel angeformter, manuelle betätigbarer Griffvorsprung befindet.

Durch diese Maßnahmen ergibt sich zum einen eine platzsparende Unterbringung der Verriegelungseinrichtung und zum anderen eine vom Aufbau her einfache und leicht zu handhabende Verriegelungseinrichtung die einen schnellen Austausch des Plattenmagazins gewährleistet. Zum Lösen der Verriegelung sind lediglich die beiden Griffvorsprünge entgegen der Kraft der Druckfeder aufeinander zuzubewegen, während nach dem Löslassen der Griffvorsprünge die Hebel aufgrund der Kraft der Druckfeder selbsttätig in ihre Verriegelungsposition übergehen.

Zwecks Erreichung einer einfachen Montage ist weiterhin bevorzugt vorgesehen, daß die sich gegenüberliegenden Stirnseiten der Hebel jeweils mittig einen vorstehenden Zapfen aufweisen, auf die die freien Enden der Druckfeder aufgeschoben sind. Zweckmäßigerweise geht hierbei jeder Hebel an der dem Zapfen gegenüberliegenden Stirnseite in einen schmalen Ansatz über, der in einer entsprechenden Öffnung im Boden bzw. in der Deckenwand des Plattenmagazins geführt ist und sich in der Verriegelungsposition des Plattenmagazins durch die zugehörige Öffnung der entsprechenden Zwischenwand des Gehäuses erstreckt.

Um ein Ausknicken der Hebel aus der Rückseite der Vorderwand des Plattenmagazins zu vermeiden, sind bei einer vorteilhaften Weiterbildung die Hebel rückseitig durch ein sich zwischen der Deckenwand und dem Boden des Plattenmagazins erstreckendes Band abgedeckt, das aus Federelementen zur Fixierung der in den Aufnahmefächern des Plattenmagazins eingeschobenen, jeweils eine Platte enthaltenden Plattenhaltersammengesetzt ist.

Der der Erfindung zugrundeliegende Gedanke wird in der nachfolgenden Beschreibung anhand eines Ausführungsbeispieles, das in der Zeichnung dargestellt ist, näher erläutert. Es zeigt:

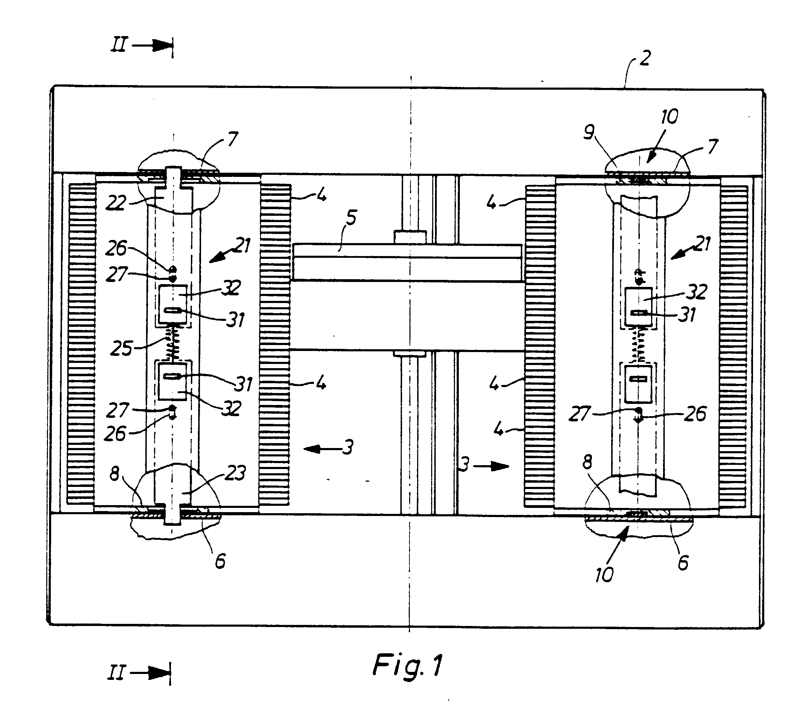

- Fig. 1: eine Vorderansicht eines Plattenabspielgerätes nach der Erfindung mit unterschiedlichen Ausbrüchen,

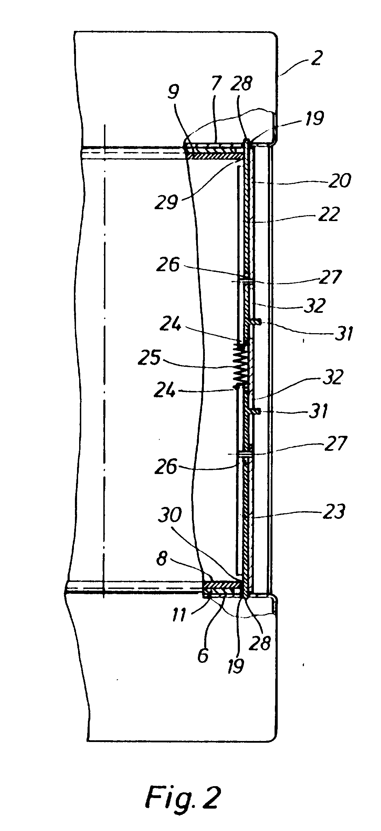

- Fig. 2: einen Schnitt durch die Darstellung nach Fig. 1 gemäß der Linie II-II, jedoch ohne ein die Rückseite der Hebel abdeckendes Band und

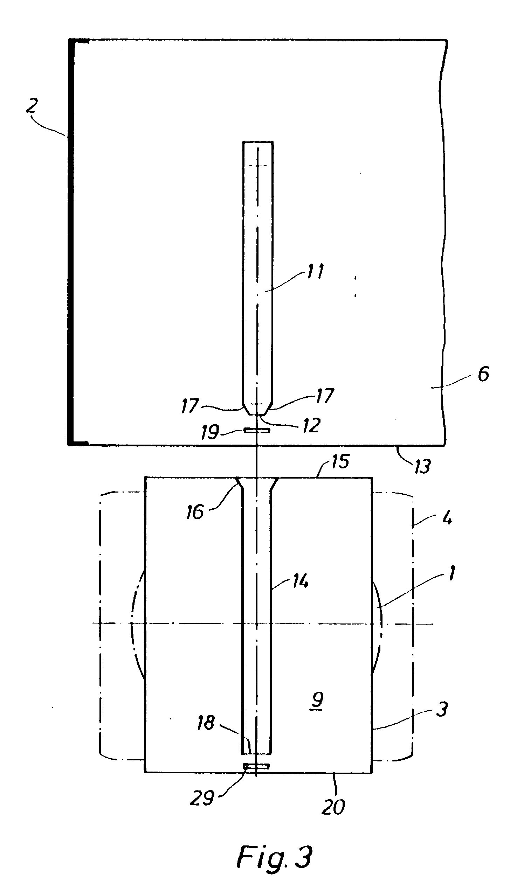

- Fig. 3: eine Teil-Draufsicht auf den rechten unteren Teil des Gehäuses des Plattenabspielgerätes mit einem davor in Einschubrichtung angeordneten Plattenmagazin.
Das Plattenabspielgerät, durch das auf Platten 1 gespeicherte Informationen optisch ausgelesen und wiedergegeben werden können, besitzt ein Gehäuse 2 mit einer zugeordneten, nicht dargestellten Bedienungstafel, die verschiedene Tasten aufweist, beispielsweise eine Plattenauswahltaste, eine Plattenabspieltaste und einen Stopptaste. Seitlich im Gehäuse 2 sind gegenüberliegend zwei Plattenmagazine 3 angeordnet, die untereinander identisch aufgebaut sind und jeweils eine Vielzahl übereinanderliegend angeordnete Aufnahmefächer für die Lagerung einer entsprechenden Anzahl an je eine Platte 1 aufnehmender Plattenhalter 4 besitzen. In dem Raum zwischen den Plattenmagazinen 3 befindet sich eine auf- und abverfahrbare Transporteinrichtung 5 zur Hin- und Herbeförderung einer gewünschten Platte 1 mit dem zugehörigen Plattenhalter 4 zwischen dem Aufnahmefach und einer Abspieleinheit. Die nicht dargstellte Abspieleinheit mit einem Plattenteller, einem Motor zur Drehung des Plattentellers und einem Abspielkopf ist feststehend zwischen und unterhalb der Ebene der beiden Plattenmagazine 3 angebracht.

Jedem Plattenmagazin 3 ist innerhalb des Gehäuses 2 eine untere Zwischenwand 6 und eine obere Zwischenwand 7 des Gehäuses 2 zugeordnet, die zwischen sich das schubfachartig von der Vorderseite des Gehäuses 2 her eingesetzte Plattenmagazin 3 aufnehmen. Zwischen der unteren Zwischenwand 6 und dem Boden 8 des Plattenmagazins 3 und zwischen der oberen Zwischenwand 7 und der Deckenwand 9 des Plattenmagazins 3 ist jeweils eine Nut/Feder-Führung 10 vorgesehen. Jede Nut/Feder-Führung 10 besteht aus einem in Einschubrichtung des Plattenmagazins 3 verlaufenden, an der unteren Zwischenwand 6 bzw. an der oberen Zwischenwand 7 angeformten Feder 11, deren vordere Stirnseite 12 einen bestimmten Abstand zu der Vorderkante 13 der jeweiligen Zwischenwand 6 bzw. 7 aufweist, und einer entsprechend ausgebildeten Nut 14 im Boden 8 bzw. in der Deckenwand 9 des Plattenmagazins 3. Die sacklochartig ausgeführte Nut 14 weist an ihrer offenen Seite im Bereich der Hinterwand 15 des Plattenmagazins 3 eine Aufweitung 16 auf, die beim Einschubvorgang des Plattenmagazins 3 mit gegenüberliegenden Anfasungen 17 der Stirnseite 12 der Feder 11 zusammenwirkt. Die Länge der Feder 11 entspricht der Länge der Nut 14, so daß im eingeschobenen Zustand des Plattenmagazins die Grundwand 18 an der Stirnseite 12 der Feder 11 anliegt, wodurch eine Begrenzung der Einschubbewegung des Plattenmagazins 3 gegeben ist.

Zwischen der Vorderkante 13 der Zwischenwände 6, 7 und der Stirnseite 12 der jeweils zugehörigen Feder 11 ist in die jeweilige Zwischenwand 6, 7 eine Öffnung 19 eingelassen, die einer an der Vorderwand 20 des Plattenmagazins 3 angebrachten Verriegelungseinrichtung 21 zugeordnet sind.

Die Verriegelungseinrichtung 21 umfaßt zwei in Längsrichtung mit Abstand übereinanderliegende, im Querschnitt U-förmig ausgeführte Hebel 22, 23, die miteinander fluchten und gleitbeweglich zwischen auf der Rückseite der Vorderwand 20 des Plattenmagazins 3 angeformten Führungsschienen liegen. Ein nicht dargestelltes Band aus Federelementen zur Fixierung der in den Aufnahmefächern des Plattenmagazins 3 eingeschobenen, jeweils eine Platte 1 enthaltenden Plattenhalter 4 deckt die beiden Hebel 22, 23 rückseitig ab, wobei das Band einerseits an der Deckenwand 9 und andererseits am Boden 8 des Plattenmagazins 3 befestigt ist. An den einander zugewandten Stirnseiten der Hebel 22, 23 befindet sich mittig jeweils ein vorstehender Zapfen 24, auf die die freien Enden einer dazwischenliegenden Druckfeder 25 aufgeschoben sind. Zur Begrenzung der Auseinanderbewegung der Hebel 22, 23 aufgrund der Druckfeder 25 weist jeder Hebel 22, 23 ein Langloch 26 auf, in das ein an der Vorderwand 20 festgelegter Zapfen 27 eingreift. Jeder Hebel 22, 23 geht an seinem freien Ende in einen schmalen Ansatz 28 über. Der Ansatz 28 des Hebels 22 erstreckt sich durch eine Öffnung 29 in der Deckenwand 9 und greift in der Verriegelungsposition des Plattenmagazins 3 in die Öffnung 19 der oberen Zwischenwand 7 ein, während der Ansatz 28 des Hebels 23 sich durch eine Öffnung 30 im Boden 8 erstreckt und in der Verriegelungsposition des Plattenmagazins 3 in die Öffnung 19 der unteren Zwischenwand 6 eingreift. Die Ein- und Ausfahrbewegung der Ansätze 28 der Hebel 22, 23 in Bezug auf die Öffnungen 19 wird durch die Größe der mit den Zapfen 27 zusammenwirkenden Langlöcher 26 bestimmt. Um die Hebel 22, 23 aus ihrer Verriegelungsposition entgegen der Kraft der Feder 25 lösen zu können, besitzt jeder Hebel 22, 23 einen Griffvorsprung 31, der sich durch eine zugehörige Aussparung 32 in der Vorderwand 20 erstreckt. Sonach kann durch Zusammendrücken der Griffvorsprünge 31 die Verriegelung des Plattenmagazins 3 mit dem Gehäuse 2 aufgehoben und das Plattenmagazin schubladenartig aus dem Gehäuse herausgezogen werden. Beim Einschieben des Plattenmagazins 3 in das Gehäuse 2 gleiten die Ansätze 28 der Hebel 22, 23 unter Zusammendrückung der Druckfeder 25 auf den Zwischenwänden 7, 6 solange, bis die Ansätze 28 der Hebel 22, 23 in die zugehörigen Öffnungen 19 der Zwischenwände 7, 6 aufgrund der Wirkung der Druckfeder 25 einrasten, womit das Plattenmagazin 3 in seiner Einschubposition innerhalb des Gehäuses 2 des Plattenabspielgerätes festgelegt ist.

Das beschriebene Ausführungsbeispiel zeigt die besonders einfache und praktisch zu handhabende Konstruktion des erfindungsgemäßen Platenabspielgerätes, das sich unbeschadet seiner Einfachheit gleichwohl als besonders zuverlässig im Hinblick auf die Auswechselbarkeit der Plattenmagazine erweist. Obwohl die Erfindung nur an einem Ausführungsbeispiel beschrieben wurde, liegen für den Fachmann, naheliegende Abwandlungen der erfindungsgemäßen Lösung, die sich aus dieser Darstellung ergeben, im Rahmen des beanspruchten Abspielgerätes.

## Patentansprüche

1. Plattenabspielgerät mit mindestens einem auswechselbaren, in übereinanderliegenden Aufnahmefächern Platten (1) enthaltenden Plattenmagazin (3), das schubfachartig in ein Gehäuse (2) des Plattenabspielgerätes eingesetzt und über eine Verriegelungseinrichtung (21) in dem Gehäuse (2) in seiner Position festgelegt ist, dadurch gekennzeichnet, daß die an der Vorderwand (20) des Plattenmagazins (3) angebrachte Verriegelungseinrichtung (21) zwei durch eine Druckfeder (25) beaufschlagte, gegenläufig bewegbare Hebel (22, 23) umfaßt, die mit zugehörigen gehäuseseitigen Öffnungen (19) zusammenwirken, wobei jedem Hebel (22 bzw. 23) in der Vorderwand (20) eine Aussparung (32) zugeordnet ist, in der sich ein an dem hinter der Aussparung (32) liegenden Hebel (22 bzw. 23) angeformter, manuell betätigbarer Griffvorsprung (31) befindet.

2. Plattenabspielgerät nach Anspruch 1, dadurch gekennzeichnet, daß die in Längsrichtung übereinanderliegenden und miteinander fluchtenden Hebel (22, 23) der Verriegelungseinrichtung (21) zwischen zwei gegenüberliegenden, auf der Rückseite der Vorderwand (20) des Plattenmagazins (3) angeformten Führungsschienen liegen und in ihren Bewegungsrichtungen jeweils durch einen an der Rückseite der Vorderwand (20) festsitzenden, in ein entsprechendes Langloch (26) des zugehörigen Hebels (22 bzw. 23) eingreifenden Zapfen (27) begrenzt sind.

3. Plattenabspielgerät nach einem der Ansprüche 1 oder 2, dadurch gekennzeichnet, daß die sich gegenüberliegenden Stirnseiten der Hebel (22, 23) jeweils mittig einen vorstehenden Zapfen (24) aufweisen, auf die die freien Enden der Druckfeder (25) aufgeschoben sind.

4. Plattenabspielgerät nach einem der Ansprüche 1 bis 3, dadurch gekennzeichnet, daß jeder Hebel (22 bzw. 23) an der dem Zapfen (24) gegenüberliegenden Stirnseite in einen schmalen Ansatz (28) übergeht, der in einer entsprechenden Öffnung (30 bzw. 29) im Boden (8) bzw. in der Deckenwand (9) des Plattenmagazins (3) geführt ist und sich in der Verriegelungsposition des Plattenmagazins (3) durch die zugehörige Öffnung (19) einer entsprechenden Zwischenwand (6, 7) des Gehäuses (2) erstreckt.

5. Plattenabspielgerät nach einem der Ansprüche 1 bis 4, dadurch gekennzeichnet, daß die Hebel (22, 23) rückseitig durch ein sich zwischen der Deckenwand (9) und dem Boden (8) des Plattenmagazins (3) erstreckendes Band abgedeckt sind, das aus Federelementen zur Fixierung der in den Aufnahmefächern des Plattenmagazins (3) eingeschobenen, jeweils eine Platte (1) enthaltenden Plattenhalter (4) zusammengesetzt ist.

## Claims

1. Disc player apparatus having at least one exchangeable disc magazine (3) which contains record discs (1) in receiving compartments located one above the other, which magazine is insertable like a sliding drawer into a housing (2) of the disc player apparatus, and is fixed in its position in the housing (2) by means of a locking arrangement (21) CHARACTERIZED IN THAT the locking arrangement (21) is mounted on the front wall (20) of the disc magazine (3) and comprises two levers (22,23) which are acted upon by a compression spring (25) to move in opposite directions and which cooperate with associated openings (19) on the housing, and associated with each lever (22,23) is an opening (32) in the front wall, in which opening (32) there is a manually operable projecting grip (31) formed on the lever (22 or 23) located behind that opening (32).

2. Disc player apparatus according to Claim 1 CHARACTERIZED IN THAT the levers (22,23) of the locking arrangement (21) are superposed in line with each other in their length direction between two opposite guide rails formed on the rear side of the front wall (20) of the disc magazine (3), and are limited in their direction of motion by means of a respective peg (27) which is fixed on the rear side of the front wall (20) and which engages in a corresponding elongated hole (26) of the associated lever (22 or 23).

3. Disc player apparatus according to Claim 1 or 2 CHARACTERIZED IN THAT the oppositely located front surfaces of the levers (22, 23) each comprise a centrally located pin (24), on which the free ends of the compression spring (25) are pushed.

4. Disc player apparatus according to any one of Claims 1 to 3 CHARACTERIZED IN THAT each lever (22 or 23) ends up at its end opposite the projecting pin (24) in a narrow extension (28), which is guided into an associated opening (30 or 29) in the floor or respectively in the ceiling (8 or 9) of the disc record magazine (3), and which extension (28), when the record magazine (3) is in its locked position, extends through an associated opening (19) of a corresponding intermediate wall (6,7) of the housing (2).

5. Disc player apparatus according to any of Claims 1 to 4 CHARACTERIZED IN THAT the levers (22,23) at their rear surfaces are covered at the rear by a belt which extends between the ceiling (9) and the floor (8) of the disc magazine (3), and the belt is assembled from spring elements for fixing the record disc containers (4), each of which contains one disc (1), and which containers (4) have been pushed into the receiving compartments of the disc magazines (3).

## Revendications

1. Lecteur de disque avec au moins un magasin de disques (3) remplaçable contenant des disques (1) dans des cases de réception superposées, qui est monté comme un tiroir dans un boîtier (2) du lecteur de disque et fixé dans sa position dans le boîtier (2) par l'intermédiaire d'un dispositif de verrouillage (21), caractérisé en ce que le dispositif de verrouillage (21) disposé sur la paroi avant (20) du magasin de disques (3) comprend deux leviers (22, 23) déplaçables en sens contraire, rappelés par un ressort de pression (25), qui coopèrent avec des ouvertures associées (19) côté boîtier, un évidement (32) étant associé à chaque levier (22, respectivement 23) dans la paroi avant (20), dans lequel se trouve une saillie de poignée (31) actionnable manuellement, formée sur le levier (22, respectivement 23) situé derrière l'évidement (32).

2. Lecteur de disque selon la revendication 1, caractérisé en ce que les leviers (22, 23) du dispositif de verrouillage (21) superposés dans le sens longitudinal et alignés l'un avec l'autre sont situés entre deux glissières de guidage opposées, formées sur le côté arrière de la paroi avant (20) du magasin de disques (3) et sont limités respectivement dans leurs directions de déplacement par un tenon (27) placé inamovible sur le côté arrière de la paroi avant (20), s'engageant dans un trou oblong (26) correspondant du levier associé (22, respectivement 23).

3. Lecteur de disque selon l'une des revendications 1 ou 2, caractérisé en ce que les côtés frontaux opposés des leviers (22, 23) présentent chacun au centre un tenon saillant (24) sur lequel les extrémités libres du ressort de pression (25) sont enfilées.

4. Lecteur de disque selon l'une des revendications 1 à 3, caractérisé en ce que chaque levier (22, respectivement 23) se transforme sur le côté frontal opposé au tenon (24) en une embase étroite (28) qui est conduite dans une ouverture correspondante (30, respectivement 29) dans le fonds (8), respectivement dans la paroi de plafond (9) du magasin de disques (3) et s'étend dans la position de verrouillage du magasin de disques (3) à travers l'ouverture associée (19) d'une paroi intermédiaire correspondante (6, 7) du boîtier (2).

5. Lecteur de disque selon l'une des revendications 1 à 4, caractérisé en ce que les leviers (22, 23) sont recouverts sur le côté arrière par une bande s'étendant entre la paroi de plafond (9) et le fond (8) du magasin de disques (3), laquelle est constituée d'éléments de ressorts pour la fixation des supports de disques (4) insérés dans les cases de réception du magasin de disques (3), contenant chacun un disque (1).
